(19) Europäisches Patentamt
European Patent Office
Office européen des brevets

(11) **EP 3 870 760 B1**

(12) **EUROPÄISCHE PATENTSCHRIFT**

(45) Veröffentlichungstag und Bekanntmachung des Hinweises auf die Patenterteilung:
**20.12.2023 Patentblatt 2023/51**

(21) Anmeldenummer: **19779824.2**

(22) Anmeldetag: **26.09.2019**

(51) Internationale Patentklassifikation (IPC):
**E01B 27/20** (2006.01)  **E01B 33/06** (2006.01)
**E01B 35/00** (2006.01)

(52) Gemeinsame Patentklassifikation (CPC):
**E01B 27/20;** E01B 33/06; E01B 35/00

(86) Internationale Anmeldenummer:
**PCT/EP2019/075961**

(87) Internationale Veröffentlichungsnummer:
**WO 2020/083599 (30.04.2020 Gazette 2020/18)**

(54) **VERFAHREN UND GLEISBAUMASCHINE ZUM STABILISIEREN EINES GLEISES**

METHOD AND MACHINE FOR STABILIZING A TRACK

PROCÉDÉ ET MACHINE POUR STABILISER UNE VOIE FERRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2018 AT 3312018**

(43) Veröffentlichungstag der Anmeldung:
**01.09.2021 Patentblatt 2021/35**

(73) Patentinhaber: **Plasser & Theurer Export von Bahnbaumaschinen GmbH**
**1010 Wien (AT)**

(72) Erfinder:
 • **ANTONY, Bernhard**
   **2000 Stockerau (AT)**
 • **AUER, Florian**
   **1010 Wien (AT)**
 • **KOPF, Fritz**
   **1140 Wien (AT)**
 • **WILCZEK, Krzysztof**
   **1200 Wien (AT)**

(56) Entgegenhaltungen:
**EP-A1- 0 666 371  WO-A1-2017/144152**
**GB-A- 2 250 765**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gebiet der Technik

Die Erfindung betrifft ein Verfahren zum Stabilisieren eines Gleises, welches auf Gleisschotter gelagerte Schwellen und darauf befestigte Schienen aufweist, mittels eines Stabilisationsaggregats, das mit einem auf den Schienen verfahrbaren Maschinenrahmen verbunden ist und einen Schwingungserreger sowie auf den Schienen abrollbare Rollen umfasst, wobei der Schwingungserreger insbesondere horizontale, quer zur Gleislängsrichtung verlaufende Schwingungen erzeugt. Zudem betrifft die Erfindung eine Gleisbaumaschine zur Durchführung des Verfahrens.

Stand der Technik

Das Stabilisieren eines Gleises, auch dynamische Gleisstabilisation genannt, dient der Herstellung einer nachhaltigen Gleislage nach dem Heben, Richten und Stopfen eines Gleises im Schotterbett. Dabei wird mittels eines Stabilisationsaggregats eine horizontale Schwingung erzeugt und auf das Gleis übertragen, um durch ein Einrütteln des Gleises eine bessere Haltbarkeit der Gleislage herbeizuführen. Dadurch werden Nachsetzungen im Schotterbett, welche nach dem Heben, Richten und Stopfen eines Gleises auftreten, stark vermindert. Des Weiteren wird der Querverschiebewiderstand des Gleises im Schotterbett wesentlich erhöht. Stabilisationsaggregate sind in der Regel an Gleisbaumaschinen angeordnet, die dynamische Gleisstabilisatoren (DGS) genannt werden. Eine entsprechende Maschine ist beispielsweise aus EP 0 666 371 A1 oder DE 41 02 870 A1 bekannt.

In WO 2008/009314 A1 ist ein Stabilisationsaggregat mit einer regelbaren dynamischen Schlagkraft offenbart. Dabei ist jedoch nur die auf den jeweiligen Schienenkopf des Gleises einwirkende Schwingung messbar, nicht jedoch die resultierende Schwingung der Schwellen des Gleises.

Aus AT 518 373 A1 (siehe ebenfalls WO 2017/144152 A1) ist ein Verfahren zum Stabilisieren eines Gleises mit Gleisschotterbett bekannt, bei dem die hervorgerufenen Schwingungen des Gleises mittels einer am Maschinenrahmen angebrachten Kamera erfasst werden. Aus den gewonnenen Bilddaten wird in weiterer Folge eine resultierende Schwingungsamplitude des Gleisrostes abgeleitet. Zusammenfassung der Erfindung

Der Erfindung liegen die Aufgaben zugrunde, ein Verfahren und eine Gleisbaumaschine der eingangs genannten Art mit einem verbesserten Stabilisationsverhalten, insbesondere mit einer optimierten Überwachung des Stabilisationsvorgangs anzugeben.

Erfindungsgemäß werden diese Aufgaben gelöst durch die Merkmale der Ansprüche 1 und 12. Vorteilhafte Weiterbildungen der Erfindung ergeben sich aus den abhängigen Ansprüchen.

Dabei wird mittels insbesondere am Stabilisationsaggregat angeordneter Sensoren während eines Schwingzyklus ein Verlauf einer vom Stabilisationsaggregat auf das Gleis wirkenden Kraft über einem Schwingweg erfasst, wobei mittels einer Auswerteeinrichtung daraus zumindest eine Kenngröße abgeleitet wird, mittels derer eine Bewertung des Stabilisationsvorgangs und/oder einer Beschaffenheit des Gleisschotterbettes erfolgt. Der Arbeitsvorgang des Stabilisierens wird zur Messprozedur, um das Last-Verformungs-Verhalten des Gleisschotters und dessen Änderungen vor Ort zu bestimmen. Durch eine Analyse der Messgrößen in Echtzeit und die Bildung zumindest einer Kenngröße kann die Gleisschotterqualität und die Gleisschotterverdichtung bereits während des Stabilisierungsvorgangs online beurteilt werden. In weiterer Folge lassen sich Prozessparameter der Verdichtung und der stabilisierten Gleislage laufend darauf abstimmen.

Auf diese Weise liegt ein Verfahren zur Verdichtungskontrolle mittels arbeitsintegrierter Messung am Gleisstabilisator und am bearbeiteten Gleis vor. Das dynamisch angeregte Stabilisationsaggregat überträgt Schwingungen auf den Gleisrost und dessen Schotterbettung, wodurch es zur Verdichtung kommt. Stabilisationsaggregat und Schottergleis bilden dabei ein dynamisches Interaktionssystem, dessen Bewegungszustand Auskunft über die Eigenschaften des Gleisschotterzustandes zulassen. Durch geeignete Analyse wird das System zur Verdichtungskontrolle und zur Optimierung der Schotterverdichtung eingesetzt.

Der Vorteil der prozessbegleitenden Verdichtungskontrolle ist eine laufende Qualitätskontrolle der geleisteten Verdichtungsarbeit und deren Dokumentation. Sie dient auch der Optimierung der gesamten Verdichtung in Verbindung mit einem Stopfvorgang, der vor dem Stabilisieren mittels eines Stopfaggregats durchgeführt wird. Dabei findet eine Hebung des Gleises beim Gleisstopfen mit einer vorgegebenen Überkorrektur in einem solchen Ausmaß statt, dass nach optimierter Endverdichtung des Gleisschotters mittels des Stabilisationsaggregats jene Gleissetzung eintritt, die genau zur vorgesehenen Soll-Lage des Gleises führt. Insbesondere bei kombinierten Maschinen, die sowohl ein Stopfaggregat als auch ein nachgeführtes Stabilisationsaggregat umfassen, ist dieser Vorteil hervorzuheben.

Ein möglichst homogener Schotterzustand nach der Verdichtung ist zwar anzustreben, das Erreichen einer optimalen Endverdichtung hat jedoch unbedingt Vorrang, damit der Großteil der Setzungen des Gleisrostes kontrolliert vorweggenommen wird und die Gleislage künftig stabil ist. Eine ausreichende und vor allem gleichmäßige Tragfähigkeit des Gleisschotters ist dabei eine essenzielle Grundvoraussetzung für die Stabilität der Gleislage im Bahnbetrieb.

Der Kern der Erfindung liegt somit darin, das dynamische Interaktionssystem Gleisstabilisator-Eisenbahngleis zu analysieren und die dynamischen Eigenschaften der einzelnen Komponenten zu identifizieren.

Das Hauptaugenmerk liegt dabei bei der Verfolgung der Änderungen in jenen Systemparametern, welche den Gleisschotter beschreiben.

Wenn während der Gleisschotterverdichtung mittels des Stabilisationsaggregats sämtliche Prozessparameter (Fahrgeschwindigkeit, Frequenz, Exzentrizität, Auflast, etc.) und die dynamischen Eigenschaften des Gleisrostes (Schienenprofile, Schienenbefestigungen, Schwellenmasse und -geometrie, etc.) unverändert blieben, so ist eine Änderung des Schwingungsverhaltens eindeutig auf die Veränderung des Gleisschotters zurückzuführen. Anhand der erfindungsgemäßen Messungen und deren Analyse können auch die Auswirkungen von Änderungen von Prozessparametern bzw. Gleisrosteigenschaften berücksichtigt bzw. erkannt werden.

In einer Weiterbildung des Verfahrens wird die Kenngröße als ein Parameter für die Ansteuerung des Stabilisationsaggregats vorgegeben. Die damit erreichte automatisierte Anpassung des Stabilisationsvorgangs erlaubt eine rasche Reaktion auf eine sich verändernde Beschaffenheit des Schotterbettes. Beispielsweise kann aus der Bewertung der Schotterbettqualität ein Vorgabewert für ein Stabilisieren mit veränderter Auflast oder mit angepasster Schwingungsfrequenz abgeleitet werden. Damit erfolgt automatisch eine optimale Auswahl der Frequenz der dynamischen Anregung und der statischen Auflast, welche das Stabilisationsaggregat in vertikaler Richtung auf das bearbeitete Gleis ausübt. Dabei ist es günstig, wenn eine automatische Regelung der Prozessparameter erfolgt.

Auf diese Weise sind die Messwerte aus der arbeitsintegrierten dynamischen Verdichtungskontrolle Basis für eine automatische Regelung der Prozessparameter zur automatischen optimalen Einstellung des Verdichtungswerkzeuges auf die vorgefundenen Schotterverhältnisse in Hinblick auf die optimale Endverdichtung des Gleisschotters durch das Stabilisationsaggregat.

In einer vorteilhaften Ausprägung der Erfindung rotieren bei aktivem Schwingungserreger zumindest zwei Exzentermassen mit aufeinander abgestimmten Phasenlagen und einer vorgegebenen Kreisfrequenz. Damit ist in einfache Weise eine Anpassung der Schwingungseinbringung in das Gleis möglich, indem eine geänderte Phasenlage bzw. geänderte Kreisfrequenz vorgegeben wird. Durch Verstellen der Exzentermassen kann die resultierende Exzentrizität stufenlos angepasst werden.

Günstigerweise wird dabei eine Erregerkraft aus der rotierenden Masse, der Exzentrizität und der Kreisfrequenz bestimmt. Da die Masse und die Exzentrizität bekannt sind, reicht die laufende Erfassung der Kreisfrequenz aus, um daraus die Erregerkraft abzuleiten. Bei Exzentermassen mit einstellbarer Exzentrizität fließt auch diese Größe in die Bestimmung der Erregerkraft mit ein.

Als eine erste vorteilhafte Kennzahl wird die Neigung des Verlaufs zur Ermittlung der Steifigkeitsverhältnisse abgeleitet. Diese Neigung der Arbeitslinie des Arbeitsdiagrammes gibt als Belastungssteifigkeit Auskunft über die Tragfähigkeit des Gleisschotters. Sie steigt im Zuge der Schotterstabilisierung an und wird als Verdichtungs- bzw. Stabilisierungsnachweis herangezogen. Dabei ist es günstig, wenn eine Gesamtneigung durch lineare Regression des erfassten Verlaufs ermittelt wird, beispielsweise nach der Methode des geringsten Fehlerquadrates.

Eine Krümmung des Verlaufs wird vorteilhafterweise als eine zweite Kennzahl abgeleitet, um Dämpfungsverhältnisse zu ermitteln. Beispielsweise lässt sich ein Dämpfungskoeffizient der mitschwingenden Masse des Gleises bestimmen. Eine Federkonstante, der Dämpfungskoeffizient und die mitschwingenden Masse des Gleises stehen über bodenmechanische Gesetzmäßigkeiten mit dem Schubmodul des Gleisschotters in Relation, welcher sich durch Rückrechnung ermitteln lässt. Der Schubmodul des Gleisschotters ist ein wichtiger Parameter zur Beurteilung der Schottersteifigkeit und damit des Verdichtungszustandes des Gleisschotters.

Eine weitere vorteilhafte Kennzahlbestimmung sieht vor, dass für zumindest einen Verlauf einer vom Stabilisationsaggregat auf das Gleis wirkenden Kraft über dem zugehörigen Schwingweg eine umschriebene Fläche mittels Kreisintegration über jeweils eine Erregerperiode als dynamisch übertragene Arbeit ermittelt wird. Für die vom Stabilisationsaggregat auf die Schienen übertragene Arbeit und die von den Schienen auf das Gleisschotterbett übertragene Arbeit ergibt sich pro Zeitspanne jeweils eine Leistung. Diese Leistungsgrößen korrespondieren sowohl untereinander als auch mit einer Motorleistung des Stabilisationsaggregats.

Zudem ist es von Vorteil, wenn in der Auswerteeinrichtung eine Modalmasse des Stabilisationsaggregats vorgegeben wird, wobei durch Berücksichtigung des Produkts dieser Modalmasse mal einer Beschleunigung des Stabilisationsaggregats eine auf die Schienen wirkende Kraft bestimmt wird und wobei der Verlauf der auf die Schienen wirkenden Kraft über dem Schwingungsweg des Stabilisationsaggregats ermittelt wird. Günstigerweise wird dabei die Beschleunigung des Stabilisationsaggregats als zweite Ableitung des Schwingwegs bestimmt.

Eine weitere Verbesserung des Verfahrens sieht vor, dass in der Auswerteeinrichtung eine Modalmasse der schwingenden Schwellen, insbesondere mit einem schwingenden Abschnitt der Schienen, vorgegeben wird, dass durch Berücksichtigung des Produkts dieser Modalmasse mal einer Beschleunigung der Schwellen eine auf das Gleisschotterbett wirkende Kraft bestimmt wird und dass der Verlauf der auf das Gleisschotterbett wirkenden Kraft über dem Schwingweg einer Schwelle ermittelt wird. Dabei ist es günstig, wenn der Schwingweg der Schwelle mittels eines am Maschinenrahmen angeordneten berührungslosen Sensors erfasst wird.

Zusätzliche Informationen über den Gleiszustand werden gewonnen, wenn in der Auswerteeinrichtung ein mechanisches Modell des Stabilisationsaggregats und des in Schwingung versetzten Gleisabschnittes hinterlegt ist und wenn mittels dieses Modells bodenmechanische Parameter errechnet werden. Die mit den Sensoren erfassten Messdaten ermöglichen auf diese Weise Rückschlüsse auf dynamische Eigenschaften der in Schwingung versetzten Systemkomponenten.

Eine weitere Variante des Verfahrens sieht vor, dass die Erfassung des Verlaufs der Kraft über dem Schwingweg erfolgt, während das Stabilisationsaggregat am Stand betrieben wird. Insbesondere für Kalibrations- und Testzwecke ist es sinnvoll, die das Stabilisationsaggregat umfassende Gleisbaumaschine während eines Messvorgangs anzuhalten.

Die erfindungsgemäße **Gleisbaumaschine** zur Durchführung eines der beschriebenen Verfahren weist ein Stabilisationsaggregat auf, das an einem Maschinenrahmen **der Gleisbaumaschine** befestigt ist und einen Schwingungserreger sowie auf Schienen abrollbare Rollen umfasst, wobei an der **Gleisbaumaschine** Sensoren zur Erfassung des Verlaufs einer vom Stabilisationsaggregat auf das Gleis wirkenden Kraft über einem Schwingweg angeordnet sind, wobei Messsignale der Sensoren einer Auswerteeinrichtung zugeführt sind und wobei die Auswerteeinrichtung zur Ermittlung einer aus dem Verlauf abgeleiteten Kenngröße eingerichtet ist. Auf diese Weise wird das Stabilisationsaggregat während eines operativen Einsatzes zusätzlich als Messapparatur genutzt, um einen Kraft-Weg-Verlauf (Arbeitsdiagramm) des Aggregats zu erfassen und daraus eine aussagekräftige Kenngröße abzuleiten.

Vorteilhafterweise ist an der **Gleisbaumaschine** zumindest ein Wegmesssensor angeordnet. Damit ist die Position der **Gleisbaumaschine** auf dem Gleis auf einfache Weise erfassbar und der jeweils abgeleiteten Kenngröße zuordenbar. Eine entsprechende Aufzeichnung der Messergebnisse liegt dann positionsbezogen vor, sodass der Zustand des Gleises über den gesamten bearbeiteten Abschnitt dokumentiert ist.

Eine weitere Verbesserung der **Gleisbaumaschine** sieht vor, dass die Auswerteeinrichtung mit einer Vorrichtungssteuerung gekoppelt ist, um das Stabilisationsaggregat in Abhängigkeit der Kenngröße anzusteuern. Veränderte Gegebenheiten am Gleis führen somit automatisch zu einer Anpassung des Stabilisationsvorgangs, um über den bearbeiteten Gleisabschnitt hinweg eine gleichmäßige Verdichtungsqualität sicherzustellen.

Für die Bestimmung der vom Stabilisationsaggregat erzeugten Kräfte umfasst vorteilhafterweise die Auswerteeinrichtung eine Speichereinrichtung, in der Modalmassen des Stabilisationsaggregats und des zu stabilisierenden Gleises abgespeichert sind. Dem Bahnbetreiber sind gewöhnlich die Daten der im Arbeitsbereich verbauten Schwellen und Schienen bekannt. Gegebenenfalls wird vorab eine Messfahrt durchgeführt, um die erforderlichen Daten zu erfassen. Dazu umfasst die **Gleisbaumaschine** beispielsweise Laserscanner zum Bestimmen der Schienen und Schwellen.

Kurze Beschreibung der Zeichnungen

Die Erfindung wird nachfolgend in beispielhafter Weise unter Bezugnahme auf die beigefügten Figuren erläutert. Es zeigen in schematischer Darstellung:

Fig. 1    Gleisbaumaschine mit Stabilisationsaggregaten

Fig. 2    Querschnitt durch ein Gleis mit Stabilisationsaggregat

Fig. 3    Draufsicht auf ein Gleis mit Stabilisationsaggregaten

Fig. 4    Querschnitt durch ein Gleis mit dynamischer Krafteinleitung mittels des Stabilisationsaggregats

Fig. 5    Arbeitsdiagramme

Fig. 6    Dynamisches Modell zur Beschreibung der dynamischen Interaktion von Stabilisationsaggregat und Schottergleis

Beschreibung der Ausführungsformen

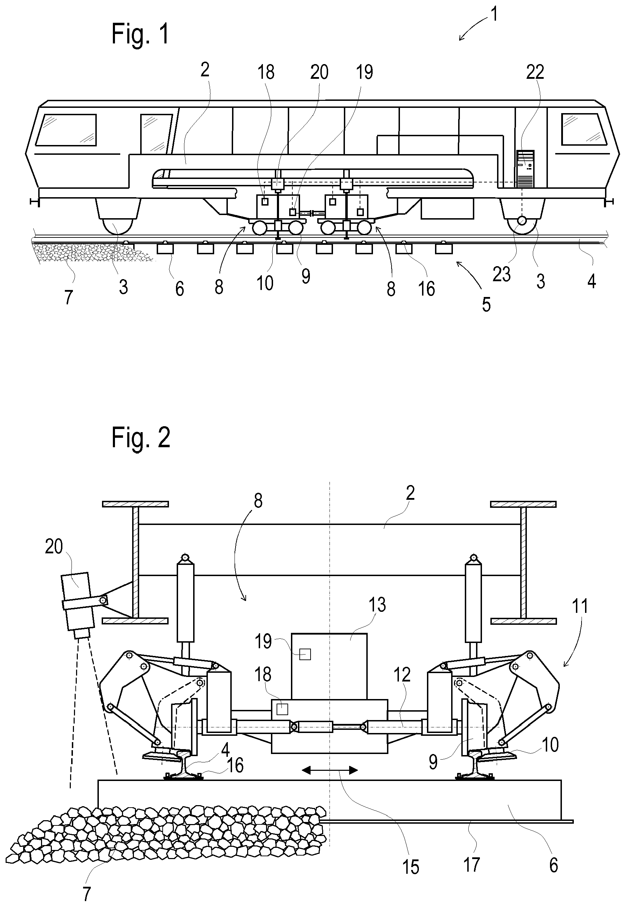

Die in Fig. 1 dargestellte Vorrichtung 1 ist als Gleisbaumaschine (dynamischer Gleisstabilisator DGS) ausgebildet und umfasst einen Maschinenrahmen 2, der auf Schienenfahrwerken 3 gestützt auf Schienen 4 eines Gleises 5 verfahrbar ist. Die Schienen 4 sind auf Schwellen 6 befestigt und bilden mit diesen einen Gleisrost, der auf Gleisschotter 7 gelagert ist. Mit dem Maschinenrahmen 2 sind vorteilhafterweise zwei Stabilisationsaggregate 8 beweglich verbunden, um gegengleiche Schwingungen auf das Gleis 5 zu übertragen. In einfachen Ausführungen ist nur ein Stabilisationsaggregat 8 vorgesehen.

Das Stabilisationsaggregat 8 umfasst Spurkranzrollen 9 und Klemmrollen 10 zum Festhalten des Gleisrostes. Konkret erfolgt das Festhalten der Schienen 4 durch die Klemmrollen 10 mittels eines Klemmmechanismus 11. Dabei sind vorteilhafterweise die Spurkranzrollen 9 mittels verriegelter Teleskopachsen 12 von innen gegen die Schienen 4 gedrückt. Das Stabilisationsaggregat 8 versetzt den Gleisrost lokal in Schwingung, welcher diese in den Gleisschotter 7 überträgt. Die Vibrationen führen dazu, dass die Körner im Korngerüst mobil werden, sich verschieben lassen und in eine dichtere Lagerung gehen. Bei neuem Gleisschotter 7 ohne einen nennenswerten Anteil von Feinteilen kann es zum Fließen des Schotters 7 kommen, welches den Verdichtungseffekt zusätzlich verstärkt. Durch die Verdichtung des Gleisschotters 7 werden dessen Tragfähigkeit und dessen Steifigkeit erhöht und die mit der Verdichtung einhergehenden Setzungen werden kontrolliert vorweggenommen.

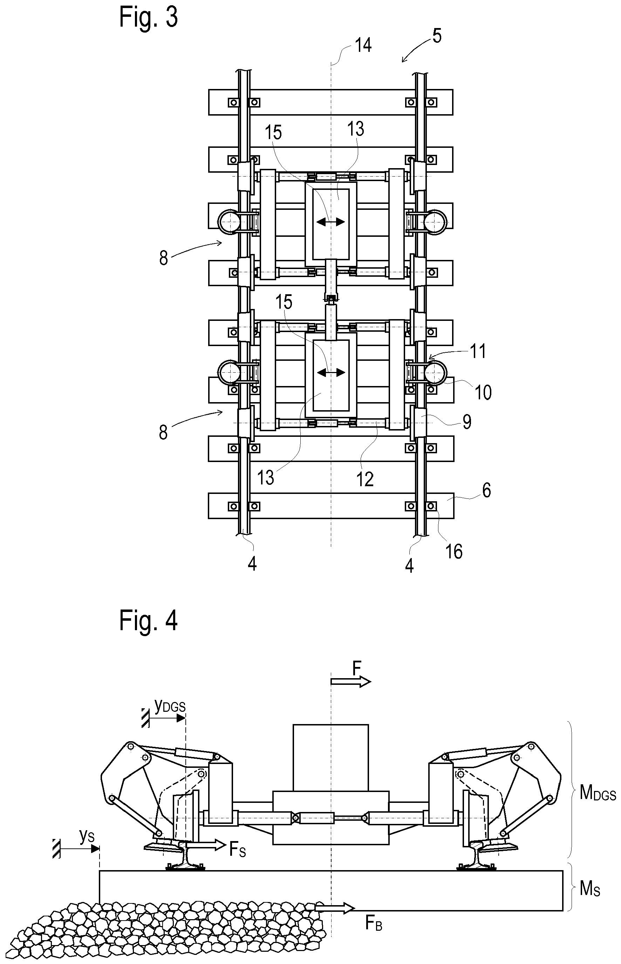

Fig. 2 zeigt einen Querschnitt durch einen Eisenbahndamm mit dem auf das Gleis 5 einwirkenden Stabilisationsaggregat 8. Fig. 3 zeigt eine entsprechende Draufsicht. Das Stabilisationsaggregat 8 wird mittels eines Schwingungserregers 13 (Richtschwinger) horizontal quer zur Gleisachse 14 dynamisch angeregt. Über die Klemmrollen 10 und Spurkranzrollen 9 werden diese horizontalen Schwingungen 15 auf die Schienen 4 und über die Schienenbefestigung 16 auf die Schwellen 6 übertragen. Die jeweilige Schwelle 6 überträgt die derart erzeugten Schwingungen gegebenenfalls über eine Schwellenbesohlung 17 auf den Gleisschotter 7, den es zu verdichten gilt.

In einer beispielhaften Ausführung umfasst der Schwingungserreger 13 rotierende Exzentermassen (Unwuchten) mit aufeinander abgestimmten Phasenlagen. Vorzugsweise rotieren die Exzentermassen gegengleich, wobei sich die Exzenterkräfte in vertikaler Richtung gegenseitig aufheben und in horizontaler Richtung verstärken. Durch Veränderung der jeweiligen Phasenlage oder der Exzentrizität ist die Wirkung der Exzentermassen einstellbar. Um die Größe der wirksamen Exzentrizität, die Frequenz und die Phasenlage der dynamischen Anregung zu ermitteln, werden die Positionen der rotierenden Exzentermassen laufend messtechnisch erfasst. Bei alternativen Schwingungserregern 13 erfolgt die Ermittlung der dynamischen Anregung in entsprechend geeigneter Weise.

Erfindungsgemäß werden mittels am Stabilisationsaggregat 8 angeordneter Sensoren 18, 19, 20 während eines Schwingzyklus ein Verlauf 21 einer vom Stabilisationsaggregat 8 auf das Gleis 5 wirkenden Kraft $F$, $F_S$, $F_B$ über einem Schwingweg $y_{DGS}$, $y_S$ (Horizontalverschiebung) erfasst. In der Anordnung gemäß Fig. 2 misst ein Sensor 18 die Bewegung des Stabilisationsaggregats 8 und ein Sensor 19 misst die Position der rotierenden Exzentermassen des Schwingungserregers 13. Beispielsweise wird mittels eines Beschleunigungssensors 18 zunächst eine Beschleunigung $\ddot{y}_{DCS}$ und jeweils durch Integration eine Schwinggeschwindigkeit $\dot{y}_{DCS}$ und der Schwingweg $y_{DGS}$ des Stabilisationsaggregats 8 und damit auch der Schienenköpfe ermittelt.

Vorteilhafterweise wird mittels eines berührungslosen Sensors 20 der Bewegungszustand der Schwellen 6 in Wirkrichtung des Stabilisationsaggregats 8 ermittelt. Dabei handelt es sich zum Beispiel um eine auf die in Schwingung versetzte Schwelle 8 gerichtete Kamera mit automatisierter Bildauswertung. Auf diese Weise wird die Verschiebung bzw. der Schwingweg $y_S$ der jeweiligen Schwelle 8 erfasst.

Vorzugsweise ist für eine Onlineauswertung in der Gleisbaumaschine eine Auswerteeinrichtung 22 angeordnet, der Sensorsignale bzw. mittels der Sensoren 18, 19, 20 erfasste Daten zugeführt sind. Dabei handelt es sich beispielsweise um einen Industriecomputer mit einer Speichereinrichtung. In der Speichereinrichtung sind Strukturdaten der Vorrichtung 1 und des bearbeiteten Gleises 4 sowie ein dynamisches Modell hinterlegt. In der Auswerteeinrichtung 22 ist eine Software eingerichtet, mittels derer Arbeitsdiagramme erstellt und ausgewertet werden. Zudem sind der Auswerteeinrichtung 22 Messergebnisse eines Wegmesssensors 23 zugeführt, um die Arbeitsdiagramme der einzelnen Schwingzyklen einer jeweiligen Position am Gleis 5 zuzuordnen. In einer anderen Ausprägung ist die Auswerteeinrichtung 22 in einer Zentrale angeordnet, wobei zwischen der Gleisbaumaschine und der Zentrale eine Datenübertragung eingerichtet ist.

Mit Bezug auf Fig. 4 werden die Kraft-Verschiebungs-Relationen (Arbeitsdiagramme) erläutert, die anhand der erfindungsgemäßen Messungen aufgestellt werden. Die Kraft $F$ der Anregung des Stabilisationsaggregats 8 durch den Schwingungserreger 13 ist das Produkt aus der wirksamen Exzentrizität (Exzentermasse $m$ mal Exzentrizität $e$) und dem Quadrat der Erregerkreisfrequenz $\omega$ multipliziert mit dem Sinus der Multiplikation von Erregerkreisfrequenz $\omega$ und Zeit t:

$$F = m \cdot e \cdot \omega^2 \cdot \sin(\omega \cdot t)$$

Sowohl Amplitude als auch Phasenlage sind aus den Messungen bekannt. Die messtechnisch ermittelte Phasenlage dient als Bezug für die weiteren Phasenlagen und ist deswegen in der Berechnung auf null gesetzt.

Die Messungen erfolgen in der Regel prozessintegriert während der Arbeit des bewegten Stabilisationsaggregats 8, können jedoch zu Kalibrations- und Testzwecken auch am Stand durchgeführt werden, um den Verdichtungsverlauf an einer festen Stelle zu verfolgen.

Die Horizontalverschiebung $y_{DGS}$ des Stabilisationsaggregats 8 und deren Ableitungen mit den zugehörigen Phasenlagen ist aus der Messung bekannt. Die Masse $M_{DGS}$ des Stabilisationsaggregats 8 und die modale Masse $M_S$ der angeregten Schwellen 6 sind konstruktionsbedingt bekannt. Die Masse der Schienenköpfe kann modal der Masse $M_{DGS}$ des Stabilisationsaggregats 8 und jene der Schienenfüße der modalen Masse $M_S$ der angeregten Schwellen 6 zugeschlagen werden.

Werden von der Erregerkraft $F$ die jeweiligen Massenträgheitskräfte der Komponenten abgezogen, so sind die Erregerkraft $F_S$ auf die Schwelle 8 und die Erregerkraft $F_B$ auf den Gleisschotter 7 bestimmbar:

$$F_B = F - \ddot{y}_{DGS} \cdot M_{DGS} - \ddot{y}_S \cdot M_S$$

$$F_S = F - \ddot{y}_{DGS} \cdot M_{DGS}$$

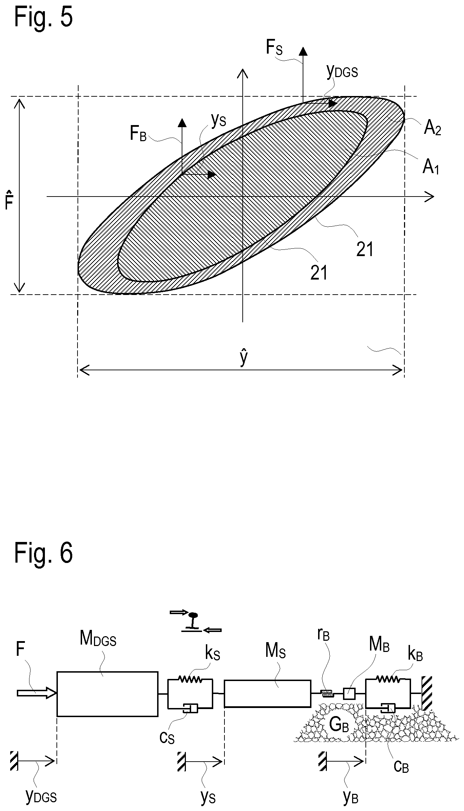

Aus den Relationen zwischen diesen Kräften $F$, $F_B$, $F_S$ und den zugehörigen Schwingwegen bzw. Verschiebungen $y_{DGS}$, $y_S$ in Wirkrichtung können die in Fig. 5 gezeigten Arbeitsdiagramme erstellt werden. Sie geben Auskunft über die Steifigkeitsverhältnisse (Neigung der Linie) und Dämpfungsverhältnisse (Krümmung) sowie der in das System eingebrachten Arbeit pro Erregerzyklus (umschriebene Flächen $A_1$ und $A_2$).

$$A_1 = \oint F_B \cdot dy_S$$

$$A_2 = \oint F_S \cdot dy_{DGS}$$

Auch die Amplitudenverhältnisse $\hat{F}$ der Kräfte $\boldsymbol{F}$, $\boldsymbol{F_B}$, $\boldsymbol{F_S}$ und die Amplitudenverhältnisse $\hat{y}$ der Schwingwege $\boldsymbol{y_{DGS}}$, $\boldsymbol{y_S}$ im System können abgelesen werden.

Um mit den aus den Messungen und deren Analyse ermittelten Amplituden und Phasenlagen die dynamischen Eigenschaften der Systemkomponenten zu bestimmenden, wird ein mechanisches Modell gemäß Fig. 6 herangezogen. Dabei sind die relevanten Systemkomponenten zur mechanischen Modellierung in Serie geschaltet.

Die messtechnisch bekannte dynamische Erregerkraft $\boldsymbol{F}$ wirkt auf die modale Masse $\boldsymbol{M_{DGS}}$ des Stabilisationsaggregats 8, welche die Verschiebung $\boldsymbol{y_{DGS}}$ erfährt. Das Stabilisationsaggregat 8 ist über die Schienen 4 und die Schienenbefestigungen 16 mit den Schwellen 6 (modale Masse $\boldsymbol{M_S}$ und Verschiebung $\boldsymbol{y_S}$) verbunden. Dabei ist die Nachgiebigkeit der Schienen 4 und der Schienenbefestigungen 16 mittels Kelvin-Voigt-Element (Feder $\boldsymbol{k_S}$ und Dämpfer $\boldsymbol{c_S}$ parallel angeordnet) modelliert.

Die Schwellen 6 liegen auf dem Gleisschotter 7 auf, welcher als Reibelement $\boldsymbol{r_B}$, gegebenenfalls einer mitschwingenden Masse $\boldsymbol{M_B}$ und einem Kelvin-Voigt-Element (Feder $\boldsymbol{k_B}$ und Dämpfer $\boldsymbol{c_B}$ parallel angeordnet) modelliert ist. Das Reibelement $r_B$ beschreibt dabei den dynamischen Querverschiebewiderstand.

Die Federkonstante $k_B$, der Dämpfungskoeffizient $c_B$ und die mitschwingenden Masse $M_B$ stehen über bodenmechanische Gesetzmäßigkeiten mit dem Schubmodul $G_B$ des Gleisschotters 7 in Relation, welcher sich durch Rückrechnung ermitteln lässt. Der Schubmodul $G_B$ des Gleisschotters 7 ist neben den Informationen aus den Arbeitsdiagrammen (Fig. 5) einer der wichtigsten Parameter zur Beurteilung der Schotter-Steifigkeit und damit des Verdichtungszustandes des Gleisschotters 7. Er wird anhand der prozessbegleitenden Messungen (Fig. 2) durch Rückrechnung mit Hilfe des mechanischen Modells (Fig. 6) laufend ermittelt.

Arbeiten zwei oder mehr Stabilisationsaggregate 8 hintereinander in einer Gleisstopfmaschine, so kann das beschriebene Messprinzip auf jedes dieser Stabilisationsaggregate 8 angewandt werden. Die unabhängig voneinander ermittelten Resultate werden zueinander in Relation gebracht, wodurch zusätzliche Information über Gleisschotterzustand, Verdichtbarkeit, Tragfähigkeitsentwicklung, Setzungsverlauf, etc. verfügbar und anwendbar ist. Deshalb ist es vorteilhaft, wenn mehrere Stabilisationsaggregate 8 hintereinander angeordnet sind und wenn die Messsignale der den Stabilisationsaggregaten 8 zugeordneten Sensoren 18, 19, 20 einer gemeinsamen Auswerteeinrichtung 22 zugeführt sind.

## Patentansprüche

1. Verfahren zum Stabilisieren eines Gleises (5) mit auf Gleisschotter (7) gelagerten Schwellen (6) und darauf befestigten Schienen (4), mittels eines Stabilisationsaggregats (8), das mit einem auf den Schienen (4) verfahrbaren Maschinenrahmen (2) verbunden ist und einen Schwingungserreger (13) sowie auf den Schienen (4) abrollbare Rollen (9, 10) umfasst, wobei der Schwingungserreger (13) insbesondere horizontale, quer zur Gleislängsrichtung verlaufende Schwingungen (15) erzeugt, **dadurch gekennzeichnet, dass** mittels Sensoren (18, 19, 20) während eines Schwingzyklus ein Verlauf (21) einer vom Stabilisationsaggregat (8) auf das Gleis (5) wirkenden Kraft ($\boldsymbol{F}$, $\boldsymbol{F_B}$, $\boldsymbol{F_y}$) über einem Schwingweg ($\boldsymbol{y_{DGS}}$, $\boldsymbol{y_S}$) erfasst wird, und dass mittels einer Auswerteeinrichtung (22) daraus zumindest eine Kenngröße abgeleitet wird, mittels derer eine Bewertung des Stabilisationsvorgangs und/oder einer Beschaffenheit des Gleisschotters (7) erfolgt.

2. Verfahren nach Anspruch 1, **dadurch gekennzeichnet, dass** die Kenngröße als ein Parameter für die Ansteuerung des Stabilisationsaggregats (8) vorgegeben wird.

3. Verfahren nach Anspruch 1 oder 2, **dadurch gekennzeichnet, dass** bei aktivem Schwingungserreger (13) zumindest zwei Exzentermassen mit aufeinander abgestimmten Phasenlagen und einer vorgegebenen Kreisfrequenz rotieren.

4. Verfahren nach Anspruch 3, **dadurch gekennzeichnet, dass** eine Erregerkraft (F) aus der rotierenden Masse, der Exzentrizität und der Kreisfrequenz bestimmt wird.

5. Verfahren nach einem der Ansprüche 1 bis 4, **dadurch gekennzeichnet, dass** zur Ermittlung der Steifigkeitsverhältnisse als eine erste Kennzahl eine Neigung des Verlaufs (21) abgeleitet wird.

6. Verfahren nach einem der Ansprüche 1 bis 5, **dadurch gekennzeichnet, dass** zur Ermittlung der Dämpfungsverhältnisse als eine zweite Kennzahl eine Krümmung des Verlaufs (21) abgeleitet wird.

7. Verfahren nach einem der Ansprüche 1 bis 6, **dadurch gekennzeichnet, dass** für zumindest einen Verlauf (21) einer vom Stabilisationsaggregat (8) auf das Gleis (5) wirkenden Kraft ($\boldsymbol{F}$, $\boldsymbol{F_B}$, $\boldsymbol{F_S}$) über dem zugehörigen Schwingweg ($\boldsymbol{y_{DGS}}$, $\boldsymbol{y_S}$) eine umschriebene Fläche ($\boldsymbol{A_1}$, $\boldsymbol{A_2}$) mittels Kreisintegration über jeweils eine Erregerperiode als dynamisch übertragene Arbeit ermittelt wird.

8. Verfahren nach einem der Ansprüche 1 bis 7, **dadurch gekennzeichnet, dass** in der Auswerteeinrichtung (22) eine Modalmasse ($M_{DGS}$) des Stabilisationsaggregats (8) vorgegeben wird, dass durch Berücksichtigung des Produkts dieser Modalmasse ($M_{DGS}$) mal einer Beschleunigung des Stabilisationsaggregats (8) eine auf die Schienen (4) wirkende Kraft ($F_S$) bestimmt wird und dass der Verlauf (21) der auf die Schienen (4) wirkenden Kraft ($F_S$) über dem Schwingungsweg ($y_{DGS}$) des Stabilisationsaggregats (8) ermittelt wird.

9. Verfahren nach einem der Ansprüche 1 bis 8, **dadurch gekennzeichnet, dass** in der Auswerteeinrichtung (22) eine Modalmasse ($M_S$) der schwingenden Schwellen (6), insbesondere mit einem schwingenden Abschnitt der Schienen (4), vorgegeben wird, dass durch Berücksichtigung des Produkts dieser Modalmasse ($M_S$) mal einer Beschleunigung der Schwellen (6) eine auf den Gleisschotter (7) wirkende Kraft ($F_B$) bestimmt wird und dass der Verlauf (21) der auf den Gleisschotter (7) wirkenden Kraft ($F_B$) über dem Schwingweg ($y_S$) einer Schwelle (6) ermittelt wird.

10. Verfahren nach einem der Ansprüche 1 bis 9, **dadurch gekennzeichnet, dass** in der Auswerteeinrichtung (22) ein mechanisches Modell des Stabilisationsaggregats (8) und des in Schwingung versetzten Gleisabschnittes hinterlegt ist und dass mittels dieses Modells bodenmechanische Parameter errechnet werden.

11. Verfahren nach einem der Ansprüche 1 bis 10, **dadurch gekennzeichnet, dass** die Erfassung des Verlaufs (21) der Kraft ($F, F_B, F_S$) über dem Schwingweg ($y_{DGS}, y_S$) erfolgt, während das Stabilisationsaggregat (8) am Stand betrieben wird.

12. Gleisbaumaschine (1) zur Durchführung eines Verfahrens nach einem der Ansprüche 1 bis 11, mit einem Stabilisationsaggregat (8), das an einem Maschinenrahmen (2) der Gleisbaumaschine (1) befestigt ist und einen Schwingungserreger (13) sowie auf Schienen (4) abrollbare Rollen (9, 10) umfasst, **dadurch gekennzeichnet, dass** an der Gleisbaumaschine (1) Sensoren (18, 19, 20) angeordnet sind, die zur Erfassung des Verlaufs (21) einer vom Stabilisationsaggregat (8) auf das Gleis wirkenden Kraft ($F, F_B, F_S$) über einem Schwingweg ($y_{DGS}, y_S$) eingerichtet sind, dass **im Betriebszustand der Gleisbaumaschine** Messsignale der Sensoren (18, 19, 20), die den Verlauf der Kraft ($F, F_B, F_S$) über dem Schwingweg ($y_{DGS}, y_S$) angeben, einer Auswerteeinrichtung (22) zugeführt sind und dass die Auswerteeinrichtung (22) zur Ermittlung einer aus dem Verlauf (21) abgeleiteten Kenngröße eingerichtet ist, mittels derer **im Betriebszustand der Gleisbaumaschine** eine Bewertung des Stabilisationsvorgangs und/oder einer Beschaffenheit des Gleisschotters (7) erfolgt.

13. Gleisbaumaschine (1) nach Anspruch 12, **dadurch gekennzeichnet, dass** zumindest ein Wegmesssensor (23) angeordnet ist.

14. Gleisbaumaschine (1) nach Anspruch 12 oder 13, **dadurch gekennzeichnet, dass** die Auswerteeinrichtung (22) mit einer Vorrichtungssteuerung gekoppelt ist, um das Stabilisationsaggregat (8) in Abhängigkeit der Kenngröße anzusteuern.

15. Gleisbaumaschine (1) nach einem der Ansprüche 12 bis 14, **dadurch gekennzeichnet, dass** die Auswerteeinrichtung (22) eine Speichereinrichtung umfasst, in der Modalmassen ($M_{DGS}, M_S$) des Stabilisationsaggregats (8) und des zu stabilisierenden Gleises (5) abgespeichert sind.

# Claims

1. A method for stabilizing a track (5) having sleepers (6) supported on track ballast (7) and rails (4) fastened thereon, by means of a stabilizing unit (8) which is connected to a machine frame (2) mobile on the rails (4) and comprises a vibration exciter (13) as well as rollers (9, 10) designed to roll on the rails (4), wherein the vibration exciter (13) generates in particular horizontal vibrations (15) running transversely to the longitudinal direction of the track, **characterized in that** a course (21) of a force ($F, F_B, F_S$) acting from the stabilizing unit (8) on the track (5) over an oscillation path ($y_{DGS}, y_S$) is recorded during a vibration cycle by means of sensors (18, 19, 20), and that, by means of an evaluation unit (22), at least one parameter is derived from this by means of which an evaluation of the stabilizing procedure and/or a quality of the track ballast (7) takes place.

2. A method according to claim 1, **characterized in that** the parameter is specified as a parameter for the control of the stabilizing unit (8).

3. A method according to claim 1 or 2, **characterized in that**, when the vibration exciter (13) is active, at least two eccentric masses rotate with phase positions matched to one another and with a prescribed angular frequency.

4. A method according to claim 3, **characterized in that** an excitation force (F) is determined from the rotating mass, the eccentricity and the angular frequency.

**5.** A method according to one of claims 1 to 4, **characterized in that**, for determining the stiffness conditions, a slope of the course (21) is derived as a first parameter.

**6.** A method according to one of claims 1 to 5, **characterized in that**, for determining the damping conditions, a curvature of the course (21) is derived as a second parameter.

**7.** A method according to one of claims 1 to 6, **characterized in that**, for at least one course (21) of a force $(F, F_B, F_S)$ acting from the stabilizing unit (8) on the track (5) over the associated oscillation path $(y_{DGS}, y_S)$, a circumscribed area $(A_1, A_2)$ is determined as dynamically transmitted work by means of circle integration over an excitation period in each case.

**8.** A method according to one of claims 1 to 7, **characterized in that** a modal mass $(M_{DGS})$ of the stabilizing unit (8) is specified in the evaluation device (22), that a force $(F_S)$ acting on the rails (4) is determined by taking into account the product of said modal mass $(M_{DGS})$ times an acceleration of the stabilizing unit (8), and that the course (21) of the force $(F_S)$ acting on the rails (4) over the oscillation path $(y_{DGS})$ of the stabilizing unit (8).

**9.** A method according to one of claims 1 to 8, **characterized in that** a modal mass $(M_S)$ of the vibrating sleepers (6), in particular with a vibrating section of the rails (4), is specified in the evaluation device (22), that a force $(F_B)$ acting on the track ballast (7) is determined by taking into account the product of said modal mass $(M_S)$ times an acceleration of the sleepers (6), and that the course (21) of the force $(F_B)$ acting on the track ballast (7) over the oscillation path $(y_S)$ of a sleeper (6) is determined.

**10.** A method according to one of claims 1 to 9, **characterized in that** a mechanical model of the stabilizing unit (8) and of the track section set in vibrations is stored in the evaluation device (22), and that soil-mechanical parameters are computed by means of said model.

**11.** A method according to one of claims 1 to 10, **characterized in that** the recording of the course (21) of the force $(F, F_B, F_S)$ over the oscillation path $(y_{DGS}, y_S)$ takes place while the stabilizing unit (8) is operated stationary.

**12.** A track maintenance machine (1) for implementing a method according to one of claims 1 to 11, with a stabilizing unit (8) which is fastened to a machine frame (2) of the track maintenance machine (1) and comprises a vibration exciter (13) as well as rollers (9, 10) designed to roll on rails (4), **characterized in that** sensors 18, 19, 20) are arranged on the track maintenance machine (1) for recording the course (21) of a force $(F, F_B, F_S)$ acting from the stabilizing unit (8) on the track over an oscillation path $(y_{DGS}, y_S)$, that during the operation of the track maintenance machine (1) measuring signals of the sensors (18, 19, 20) which specify the course of the force $(F, F_B, F_S)$ over the oscillation path $(y_{DGS}, y_S)$, are supplied to an evaluation device (22), and that the evaluation device (22) is designed for determining a parameter derived from the course (21) by means of which an evaluation of the stabilizing procedure and/or a quality of the track ballast (7) takes place during the operation of the track maintenance machine (1).

**13.** A track maintenance machine according to claim 12, **characterized in that** at least one path measurement sensor (23) is arranged.

**14.** A track maintenance machine according to claim 12 or 13, **characterized in that** the evaluation device (22) is coupled to a device control in order to control the stabilizing unit (8) in dependence on the parameter.

**15.** A track maintenance machine according to one of claims 12 to 14, **characterized in that** the evaluation device (22) includes a memory device in which modal masses $(M_{DGS}, M_S)$ of the stabilizing unit (8) and of the track (5) to be stabilized are stored.

**Revendications**

**1.** Procédé de stabilisation d'une voie ferrée (5) avec des traverses (6) logées sur du ballast de voie (7) et des rails (4) fixés sur elles, au moyen d'un module de stabilisation (8) qui est connecté à un châssis de machine (2) pouvant être déplacé sur les rails (4) et comprend un excitateur d'oscillations (13) ainsi que des rouleaux (9, 10) pouvant être déroulés sur les rails (4), dans lequel l'excitateur d'oscillations (13) génère notamment des oscillations horizontales (15), s'étendant transversalement à la direction longitudinale de voie, **caractérisé en ce qu'**un tracé (21) d'une force $(F, F_B, F_S)$ agissant sur la voie ferrée (5) par le module de stabilisation (8) au-dessus d'une course d'oscillation $(y_{DGS}, y_S)$ est détecté au moyen de capteurs (18, 19, 20) pendant un cycle d'oscillation, et qu'au moins une grandeur caractéristique en est dérivée au moyen d'un dispositif d'évaluation (22), au moyen de laquelle une évaluation du processus de stabilisation et/ou d'une qualité du ballast de voie (7) s'effectue.

**2.** Procédé selon la revendication 1, **caractérisé en ce que** la grandeur caractéristique est prédéfinie en tant

15      **EP 3 870 760 B1**      16

que paramètre pour la commande du module de stabilisation (8).

3. Procédé selon la revendication 1 ou 2, **caractérisé en ce qu'**au moins deux masses excentriques tournent avec des positions de phase ajustées l'une à l'autre et une fréquence angulaire prédéfinie en cas d'excitateur d'oscillations actif (13).

4. Procédé selon la revendication 3, **caractérisé en ce qu'**une force d'excitateur (F) est déterminée à partir de la masse en rotation, l'excentricité et la fréquence angulaire.

5. Procédé selon une des revendications 1 à 4, **caractérisé en ce qu'**une inclinaison du tracé (21) est dérivée en tant que premier chiffre caractéristique pour la détermination des rapports de raideur.

6. Procédé selon une des revendications 1 à 5, **caractérisé en ce qu'**une courbure du tracé (21) est dérivée en tant que second chiffre caractéristique pour la détermination des rapports d'atténuation.

7. Procédé selon une des revendications 1 à 6, **caractérisé en ce qu'**une surface circonscrite ($A_1$, $A_2$) est déterminée au moyen d'une intégration circulaire par le biais à chaque fois d'une période d'excitateur en tant que travail à transmission dynamique pour au moins un tracé (21) d'une force ($F$, $F_B$, $F_S$) agissant sur la voie ferrée (5) par le module de stabilisation (8) au-dessus de la course d'oscillation associée ($y_{DGS}$, $y_S$).

8. Procédé selon une des revendications 1 à 7, **caractérisé en ce qu'**une masse modale ($M_{DGS}$) du module de stabilisation (8) est prédéfinie dans le dispositif d'évaluation (22), qu'une force ($F_S$) agissant sur les rails (4) est déterminée en tenant compte du produit de cette masse modale ($M_{DGS}$) par une accélération du module de stabilisation (8) et que le tracé (21) de la force ($F_S$) agissant sur les rails (4) au-dessus de la course d'oscillation ($y_{DGS}$) du module de stabilisation (8) est déterminé.

9. Procédé selon une des revendications 1 à 8, **caractérisé en ce qu'**une masse modale ($M_S$) des traverses oscillantes (6), notamment avec une section oscillante des rails (4), est prédéfinie dans le dispositif d'évaluation (22), qu'une force ($F_B$) agissant sur le ballast de voie (7) est déterminée en tenant compte du produit de cette masse modale ($M_S$) par une accélération des traverses (6) et que le tracé (21) de la force ($F_B$) agissant sur le ballast de voie (7) au-dessus de la course d'oscillation ($y_S$) d'une traverse (6) est déterminé.

10. Procédé selon une des revendications 1 à 9, **carac-**

**térisé en ce qu'**un modèle mécanique du module de stabilisation (8) et de la section de voie mise en oscillation est stocké dans le dispositif d'évaluation (22) et que des paramètres mécaniques du sol sont calculés au moyen de ce modèle.

11. Procédé selon une des revendications 1 à 10, **caractérisé en ce que** la détection du tracé (21) de la force ($F$, $F_B$, $F_S$) au-dessus de la course d'oscillation ($y_{DGS}$, $y_S$) s'effectue pendant que le module de stabilisation (8) est exploité au poste.

12. Machine de pose de voie (1) pour la réalisation d'un procédé selon une des revendications 1 à 11, avec un module de stabilisation (8) qui est fixé à un châssis de machine (2) de la machine de pose de voie (1) et comprend un excitateur d'oscillations (13) ainsi que des rouleaux (9, 10) pouvant être déroulés sur des rails (4), **caractérisée en ce que** des capteurs (18, 19, 20) sont disposés sur la machine de pose de voie (1), lesquels sont configurés pour la détection du tracé (21) d'une force ($F$, $F_B$, $F_S$) agissant sur la voie ferrée par le module de stabilisation (8) au-dessus d'une course d'oscillation ($y_{DGS}$, ys), que des signaux de mesure des capteurs (18, 19, 20) qui indiquent le tracé de la force ($F$, $F_B$, $F_S$) au-dessus de la course d'oscillation ($y_{DGS}$, $y_S$) sont acheminés à un dispositif d'évaluation (22) dans l'état de fonctionnement de la machine de pose de voie, et que le dispositif d'évaluation (22) est configuré pour la détermination d'une grandeur caractéristique dérivée du tracé (21) au moyen de laquelle une évaluation du processus de stabilisation et/ou d'une qualité du ballast de voie (7) s'effectue dans l'état de fonctionnement de la machine de pose de voie.

13. Machine de pose de voie (1) selon la revendication 12, **caractérisée en ce qu'**au moins un capteur de déplacement (23) est disposé.

14. Machine de pose de voie (1) selon la revendication 12 ou 13, **caractérisée en ce que** le dispositif d'évaluation (22) est couplé à une commande de dispositif pour commander le module de stabilisation (8) en fonction de la grandeur caractéristique.

15. Machine de pose de voie (1) selon une des revendications 12 à 14, **caractérisée en ce que** le dispositif d'évaluation (22) comprend un dispositif de stockage dans lequel des masses modales ($M_{DGS}$, $M_S$) du module de stabilisation (8) et de la voie ferrée à stabiliser (5) sont mémorisées.

**9**

Fig. 1

Fig. 2

Fig. 3

Fig. 4

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0666371 A1
- DE 4102870 A1
- WO 2008009314 A1
- AT 518373 A1
- WO 2017144152 A1